# EUROPÄISCHE PATENTSCHRIFT

(11) **EP 2 059 686 B1**
(45) Veröffentlichungstag und Bekanntmachung des Hinweises auf die Patenterteilung: **16.10.2013**
(21) Anmeldenummer: 07802672.1
(22) Anmeldetag: 17.08.2007
(51) Int. Cl.: F16B 41/00, F16B 33/00, F16B 31/02

(54) **AUFNAHMEMITTEL**
RECEIVING MEANS
ÉLÉMENT DE RÉCEPTION

(30) Priorität: 30.08.2006 DE 102006040618
(43) Veröffentlichungstag der Anmeldung: 20.05.2009
(73) Patentinhaber: Huf Hülsbeck & Fürst GmbH & Co. KG, 42551 Velbert (DE)
(72) Erfinder: BUSCHMANN, Gerd, 42553 Velbert (DE); BUSS, Wolfgang, 42697 Solingen (DE)
(74) Vertreter: Vogel, Andreas
(86) Internationale Anmeldenummer: PCT/EP2007/058552
(87) Internationale Veröffentlichungsnummer: WO 2008/025686

(56) Entgegenhaltungen:
- DE-A1- 3 330 427
- DE-A1- 10 222 289
- DE-A1- 19 837 319
- GB-A- 323 980
- US-A- 4 715 756
- US-A1- 2005 147 486

## Beschreibung

Die Erfindung betrifft ein Aufnahmemittel für eine Schraube, wobei die Schraube einen Schraubenkopf und ein Gewindeteil aufweist. In dem Aufnahmemittel ist ein Lager angeordnet und in das Lager ist die Schraube einschraubbar.

Aufnahmemittel der genannten Art sind dem Fachmann aus der Verbindungstechnik bekannt. Bei dem Aufnahmemittel handelt es sich im Allgemeinen um ein quader- oder zylinderartiges Element, welches ein Innengewinde aufweist. Das Innengewinde dient zur kraft- und/oder formschlüssigen Verbindung des Aufnahmemittels mit einer Schraube. Die Außenkontur des Aufnahmemittels hängt im Allgemeinen vom Anwendungsbereich ab sowie dem verwendeten Werkzeug. Aus dem Stand der Technik sind Aufnahmemittel mit sechs- oder vierkantiger Außenform bekannt.

Umgangssprachlich werden die Aufnahmemittel auch als Schraubenmuttern bezeichnet.

Aus einer Schraube und einem Aufnahmemittel gebildete Schraubverbindungen finden in vielerlei Bereichen Verwendung. Insbesondere dienen Schraubverbindungen als lösbare Verbindung von Bauteilen aller Art. Häufig sollen dabei zwei oder mehrere Teile so zueinander angeordnet werden, dass die Schraubverbindung selber nur auf Zug beansprucht wird und die zu verbindenden Teile durch die Haftreibung fixiert werden. Dazu müssen die Bauteile eine Bohrung aufweisen, durch die ein Gewindeteil der Schraube durchgeschoben wird. Auf der, einem Schaubenkopf entgegengesetzten Seite des Gewindeteils wird anschließend das Aufnahmemittel aufgeschraubt.

Aufnahmemittel der genannten Art haben sich insbesondere bei der Montage von Türaußengriffen an Kraftfahrzeugen als unzulänglich erwiesen. Ein Türaußengriff weist im Allgemeinen einen Schließzylinder, Teile des Türgriffes sowie eine Mechanik, die bei Betätigung eine Tür entriegelt, auf. Die Mechanik sowie der Schließzylinder sind häufig auf einen gemeinsamen Träger montiert, wobei letzterer mit der Fahrzeugkarosserie verschraubt wird. Die Verschraubung geschieht dergestalt, dass eine Schraube von der Außenseite des Fahrzeuges durch eine entsprechende Bohrung in der Fahrzeugkarosserie geschoben und auf diese Schraube der Träger aufgesetzt wird. Anschließend wird durch Verwendung eines Aufnahmemittels eine kraft- und/oder formschlüssige Verbindung zwischen dem Träger und der Karosserie des Fahrzeuges erreicht. Bei der Verwendung gattungsgemäßer Aufnahmemittel ist es allerdings unberechtigten Personen möglich, von außen die Schraube zu lösen und dadurch das Schloss aus der vorgesehenen Position zu entfernen. Dieses führt zum einen zu einer Beschädigung des Kraftfahrzeuges und zum anderen können so unberechtigte Personen in das Fahrzeuginnere gelangen.

Des Weiteren sind unterschiedliche Schraubverbindungen bekannt. So offenbart die Druckschrift GB 323 980 A eine Schraubenmutter, die mit abgefasten, schrägen Flächen ausgebildet ist, die mit ähnlichen, dazu passenden Flächen eines zylinderförmigen Schlüssel zusammenwirken kann, so dass die Schraubenmutter in nur eine Richtung durch den Schlüssel gedreht werden kann.

Die Druckschrift US 2005/0147486 A1 offenbart ein Ventil mit einer Kappe, die sich aus einer Hülle und einem Gewindekörper zusammensetzt. Die Hülle und der Gewindekörper sind so aufgebaut, dass sich der Gewindekörper nur in einer Richtung mit der Hülle mitdreht.

Ausgehend von dem zuvor erwähnten Stand der Technik ist es daher Aufgabe der vorliegenden Erfindung, ein Aufnahmemittel zu schaffen, das bei einfacher und unkomplizierter Handhabung einen Diebstahlsschutz aufweist.

Die Lösung der Aufgabe wird durch den Diebstahlschutz mit den Merkmalen des Anspruchs 1 erreicht. In den abhängigen Ansprüchen 2 bis 12 sind bevorzugte Weiterbildungen des Diebstahlschutzes aufgeführt. Darüber hinaus wird in dem Anspruch 13 eine Schraubverbindung mit einem erfindungsgemäßen Diebstahlschutz beansprucht. Des Weiteren wird in dem Anspruch 14 ein Türaußengriff mit einer erfindungsgemäßen Schraubverbindung und in dem Anspruch 15 eine Betätigungsvorrichtung mit einer erfindungsgemäßen Schraubverbindung beansprucht. Merkmale und Details, die im Zusammenhang mit dem erfindungsgemäßen Diebstahlschutz beschrieben sind, gelten dabei selbstverständlich auch im Zusammenhang mit der erfindungsgemäßen Schraubverbindung bzw. dem erfindungsgemäßen Türaußengriff und jeweils umgekehrt.

Erfindungsgemäß wird die Aufgabe durch einen Diebstahlschutz gelöst, der eine Drehsicherung, die durch ein Aufnahmemittel und ein Haltesystem gebildet ist, aufweist,
wobei in dem Aufnahmemittel ein Lager angeordnet ist und in das Lager eine Schraube, die einen Schraubenkopf und ein Gewindeteil aufweist, einschraubbar ist, wobei die Drehsicherung eine Rotation des Aufnahmemittels um eine Längsachse in eine erste Drehrichtung beim Einschrauben verhindert und eine Rotation des Aufnahmemittels in eine zweite Drehrichtung so ermöglicht, dass ein Ausschrauben der Schraube verhindert wird, wobei insbesondere die erste Drehrichtung gegenläufig zu der zweiten Drehrichtung ist,
wobei das Lager ein Kernlager und ein Außenlager aufweist, wobei zwischen dem Kernlager und dem Außenlager eine Überlastkupplung angeordnet ist.

Eine Schraube im Sinne der Erfindung ist ein zylindrischer oder kegelförmiger Stift oder Bolzen, auf dem ein Gewinde aufgebracht ist und der an einem Ende einen Kopf trägt. Das Gewinde kann prinzipiell als Keil oder schiefe Ebene betrachtet werden, welche spiralförmig aufgewickelt ist. Je nach Art des Verwendungszweckes oder des Materials, in welches die Schraube eingebracht werden soll, können unterschiedlichste Schraubenarten Verwendung finden. Die Schraubenarten unterscheiden sich dabei hauptsächlich in der Form und der Steigung des Gewindes. Bekannt sind Holzschrauben, Blechschrauben, Kunststoffschrauben, Schnellbauschrauben und Maschinenschrauben, welche zum Teil metrische oder zöllige Gewinde aufweisen. Die Schraube selber und/oder einzelne Elemente der Schraube können einen Kunststoff, ein Metall und/oder einen Verbundwerkstoff enthalten.

Durch die Art des Gewindes - Rechts- oder Linksgewinde - ist eine erste bzw. zweite Drehrichtung der Schraube vorgegeben. Die erste Drehrichtung - das so genannte Einschrauben - führt zu einer axialen Bewegung des Gewindeteiles auf das Aufnahmemittel zu. Eine Drehung der Schraube in eine zweite Drehrichtung - das so genannte Ausschrauben - führt zu einer axialen Bewegung des Gewindeteiles aus dem Aufnahmemittel heraus. Die beiden Drehrichtungen sind gegenläufig.

Als Lager im Sinne der Anmeldung gilt jener Bereich des Aufnahmemittels, welcher die Schraube lagert. Dabei umfasst der Bereich des Lagers zwar auch, aber nicht nur jenen Teil des Aufnahmemittels, der einen direkten kraft- und/oder formschlüssigen Kontakt mit den Außenflächen der Schraube aufweist. Zusätzlich umfasst das Lager weitere Bereiche des Aufnahmemittels und ist im Allgemeinen mit diesem einstückig und/oder materialeinheitlich verbunden.

Als Gewindelager im Sinne der Anmeldung gilt jener Bereich des Aufnahmemittels, der eine funktionelle Verbindung mit der Schraube aufweist. Das Gewindelager ist ein Teil des Lagers. Insbesondere besitzt das Gewindelager einen direkten kraft- und/oder formschlüssigen Kontakt mit den Außenflächen der Schraube, insbesondere dem Gewinde. Das Gewindelager kann je nach Ausführungsform einstückig und/oder materialeinheitlich mit dem Aufnahmemittel verbunden sein. Insbesondere bezeichnet der Begriff Gewindelager jenen Bereich des Aufnahmemittels, der das Innengewinde umfasst, in das die Schraube geschraubt werden kann. Weist die Schraube ein selbstschneidendes Gewinde auf, so umfasst der Bereich des Gewindelagers jenen Teil, in dem sich das Gewinde einschneidet.

In der Erfindung verhindert die Drehsicherung eine Rotation des Aufnahmemittels um eine Längsachse der Schraube in eine erste Drehrichtung und ermöglicht eine Rotation des Aufnahmemittels in eine zweite Drehrichtung. Die Drehsicherung ermöglicht also beispielhaft ein Einschrauben und verhindert gleichzeitig ein Ausschrauben der Schraube. Dieses Verhalten der Drehsicherung kann dadurch erreicht werden, dass einerseits ein Haltesystem das Aufnahmemittel bei einem Einschrauben der Schraube drehfest hält. Folglich kann das Aufnahmemittel seine Position nicht verändern und insbesondere keine axiale Drehung um seine Längsachse ausführen. Durch das Zusammenwirken des Gewindeteiles der Schraube und des Innengewindes des Aufnahmemittels resultiert das Einschrauben in einer axialen Bewegung der Schraube in Richtung des Aufnahmemittels. Andererseits hält das Haltesystem das Aufnahmemittel bei einem Ausschrauben der Schraube nicht drehfest an seiner Position. Vielmehr folgt das Aufnahmemittel bei einem Ausschrauben der axialen Drehung der Schraube.

Mit dem Begriff folgen ist erfindungsgemäß gemeint, dass die Winkelgeschwindigkeit der Schraube und des Aufnahmemittels etwa gleich sind. Ist die Schraube in das Innengewinde des Aufnahmemittels eingeschraubt, besteht zwischen den Furchen der beiden Gewinde eine Haftreibung. Damit die Schraube um die eigene Längsachse gedreht werden kann, muss das auf die Schraube einwirkende Drehmoment größer sein, als das durch die Haftreibung erzeugte Haltemoment. Ein Überwinden des Haltemomentes führt nur dann zu einer axialen Bewegung der Schraube, wenn das Aufnahmemittel nicht der Drehung der Schraube folgt. Dieses ist aber dann der Fall, wenn das Aufnahmemittel nicht derart abgestützt ist, dass dieses das Moment weiterleiten kann. Erfindungsgemäß ist es vorgesehen, dass das Haltesystem das Aufnahmemittel bei einem Ausschrauben der Schraube nicht abstützt. Folglich führt das Einbringen eines Drehmomentes in die Schraube nicht zu einem Überwinden des Haftmomentes, sondern zu einer axialen Drehung des Aufnahmemittels. Erfindungsgemäß muss die Winkelgeschwindigkeit des Aufnahmemittels nicht identisch sein mit jener der Schraube. So kann beispielsweise die Winkelgeschwindigkeit des Aufnahmemittels zeitlich variieren und immer nur zeitweise jener der Schraube entsprechen.

Damit das Aufnahmemittel und das Haltesystem eine Drehsicherung bilden, kann das erste mittel- oder unmittelbar an dem zweiten angeordnet sein. In einer weiteren vorteilhaften Ausgestaltung ist an dem Haltesystem ein Haltemittel angeordnet, welches einen form- und/oder kraftschlüssigen Kontakt mit dem Aufnahmemittel aufweist. Das Haltemittel ist folglich jenes Element des Haltesystems, das einen direkten Kontakt mit dem Aufnahmemittel besitzt.

In einer weiteren vorteilhaften Ausgestaltung weist das Haltemittel ein Rastmittel und das Aufnahmemittel ein Gegenmittel auf. Das Rastmittel kann form- und/oder kraftschlüssig in dem Gegenrastmittel zum Liegen kommen und so eine axiale Drehung des Aufnahmemittels in eine Richtung verhindern. Als zweckdienlich hat es sich erwiesen, wenn das Haltemittel eine Rastnase und das Aufnahmemittel eine Rastaussparung ist. So kann es sich beispielhaft bei dem Haltemittel um eine keilförmige Ausformung handeln, die in eine V-artig ausgeformte Rastaussparung eingreift. Als vorteilhaft hat es sich erwiesen, wenn eine Seite der V-artigen Aussparung etwa senkrecht verläuft. Dadurch kann das, auf das Aufnahmemittel einwirkende Drehmoment optimal auf das Haltemittel bzw. das Haltesystem übertragen werden. Weist die dazu entgegengesetzte Seite des V-artigen Ausschnittes nur eine geringe Steigung auf, kann die Rastnase bei einer entgegegesetzten Drehung des Aufnahmemittels leicht aus der Rastaussparung herausgleiten. Weiterhin ist es denkbar, dass es sich bei dem Rastmittel um eine federbelastete Kugel handelt, die in eine als Mulde ausgeformte Rastaussparung eingreift. Weiterhin kann die Kinematik der Rast- bzw. Gegenrastmittel umgekehrt werden und das Haltemittel das Gegenrastmittel aufweisen, in welches ein Rastmittel eingreift, das an dem Aufnahmemittel angeordnet ist.

Bei dem Haltesystem kann es sich um ein separates Element handeln, welches an dem zu verschraubenden Werkstück angeordnet ist. Denkbar ist aber auch, dass das Haltesystem einstückig und/oder materialeinheitlich mit dem Werkstück verbunden ist.

Des Weiteren kann das Haltesystem in jedem Bereich der Außenfläche des Aufnahmemittels angeordnet sein. Als vorteilhaft hat es sich aber herausgestellt, wenn sich das Haltesystem im Bereich einer kopf- oder bodenseitigen Außenfläche des Aufnahmemittels befindet. Das Gesagte gilt gleichfalls für das Haltemittel. Da dieses Haltemittel mit dem Aufnahmemittel zusammenwirkt, ist die Position des ersteren abhängig von jener des zweiten.

In einer weiteren vorteilhaften Ausführungsvariante umfasst das Haltesystem das Aufnahmemittel zumindest bereichsweise und das Haltemittel ist ein federbelasteter Steg. Dieser Steg kann einerseits aus einem federnden Material aufgebaut sein oder durch eine separate Feder unterstützt werden. Durch die Federkraft soll gewährleistet sein, dass das Rastmittel in das Gegenrastmittel eingedrückt wird. So ist eine störungsfreie Funktion der Drehsicherung garantiert. Denkbar ist es, dass der Steg einstückig und/oder materialeinheitlich mit dem zu verschraubenden Werkstückes verbunden ist. Als zweckdienlich hat es sich herausgestellt, wenn der Steg oberhalb der kopfseitigen Außenfläche des Aufnahmemittels angeordnet ist. Letzteres kann in diesem Fall an der kopfseitigen Außenfläche das Gegenrastmittel aufweisen.

Durch das Abgleiten des Außengewindes des Gewindeteiles auf dem Innengewinde des Aufnahmemittels entsteht eine axial zur Längsachse der Schraube verlaufende Kraft. Die Richtung dieser Kraft ergibt sich durch die Drehrichtung der Schraube. Bei einem Einschrauben wirkt die Kraft auf ein Werkstück, welches zwischen dem Aufnahmemittel und dem Schraubenkopf gelagert ist. Haben sowohl der Schraubenkopf als auch das Aufnahmemittel zumindest bereichsweise kraftschlüssigen Kontakt mit dem Werkstück, wirkt gemäß des Newtonschen Axioms auf das Aufnahmemittel eine dem Betrag nach gleiche Kraft wie jene, die auf das Werkstück einwirkt. Erreicht die, auf das Aufnahmemittel einwirkende Kraft die Größe einer Grenzkraft, so kann das zur Zerstörung des Aufnahmemittels und/oder der Schraube führen. Diese Zerstörung geschieht insbesondere durch plastische Verformung der Gewindeabschnitte. Erfindungsgemäß ist es deshalb vorgesehen, dass das Lager des Aufnahmemittels ein Kernlager und ein Außenlager aufweist, wobei das Kernlager und das Außenlager eine Überlastkupplung aufweisen. Dabei soll die Überlastkupplung die maximal in das Aufnahmemittel einbringbare Kraft auf eine Grenzkraft begrenzen.

In einer vorteilhaften Ausgestaltung kann die Überlastkupplung beim Erreichen der Grenzkraft das Kernlager vom Außenlager trennen. Diese Trennung kann sowohl reversibel als auch nicht reversibel geschehen. In einer ersten Ausgestaltung kann eine reversible Trennung durch eine Magnetverbindung zwischen dem Kernlager und dem Außenlager erreicht werden. Diese Magnetverbindung ermöglicht eine reversible Abkopplung des Kernlagers vom Außenlager beim Überschreiten der Grenzkraft. Als vorteilhaft haben sich ebenfalls Rast- und Gegenrastmittel erwiesen, die zwischen Kernlager und Außenlager angeordnet sind. Beim Erreichen der Grenzkraft kann das Rastmittel aus dem Gegenrastmittel ausklinken und so die erfindungsgemäße Trennung des Kernlagers und des Außenlagers voneinander erreichen.

Für eine nicht reversible Trennung kann in einer weiteren vorteilhaften Ausgestaltung ein Verbindungselement das Kernlager und das Außenlager verbinden. Bei dem Verbindungselement kann es sich insbesondere um eine einstückige und/oder materialeinheitliche Verbindung zwischen Kernlager und Außenlager handeln. Um eine Trennung des Kernlagers und des Außenlagers voneinander innerhalb eines möglichst schmalen Kraftintervalls zu erreichen, kann das Verbindungselement eine Sollbruchstelle aufweisen. Solcherart Sollbruchstellen werden durch eine gezielte Schwächung des Materials erreicht. Denkbar ist es ebenfalls, dass das Verbindungselement durch die Grenzkraft plastisch und/oder elastisch verformt und/oder zerstört wird. Es kann, muss aber keine vollständige körperliche Trennung zwischen Außenlager und Kernlager entstehen. Entscheidend ist vielmehr nur, dass keine weiteren axialen Kräfte vom Kernlager auf das Außenlager übertragen werden.

In einer weiteren Ausgestaltung kann das Verbindungselement stegartig zwischen dem Kernlager und dem Außenlager angeordnet sein. Je nach Verwendungszweck hat es sich als vorteilhaft erwiesen, den Steg an der kopf- oder bodenseitigen Außenfläche des Kernlagers zu positionieren. Entsprechend muss dann die Ausgestaltung des Außenlagers sein, damit dieses zum einen mit dem Kernlager verbunden werden kann und zum anderen ein ungehindertes Durchführen der Schraube ermöglicht. Denkbar ist es ebenfalls, dass das Außenlager eine zentrale Bohrung aufweist, in welcher das Kernlager angeordnet ist. In diesem Fall haben sich stegartige Verbindungselemente als vorteilhaft erwiesen, die die Außenfläche des Kernlagers mit der Innenfläche der Bohrung des Außenlagers verbinden. Dabei liegen Kernlager und Außenlager auf einer gemeinsamen Lagerlängsachse, so dass auf das Aufnahmemittel übertragene Kräfte gleichmäßig auf Kernlager und Außenlager verteilt werden. In dieser Konstellation hat es sich als vorteilhaft erwiesen, wenn der Gewindeteil der Schraube in das Kernlager einschraubbar ist.

In einer weiteren vorteilhaften Ausgestaltung kann das Aufnahmemittel und/oder einzelne Elemente des Aufnahmemittels einen Kunststoff-, einen Metall- und/oder einen Verbundwerkstoff enthalten. Dabei bezeichnet der Begriff Kunststoff alle Stoffe, deren Grundbestandteil synthetisch oder halbsynthetisch erzeugte Polymere mit organischenGruppen sind. Im Gegensatz dazu umfasst der Begriff Verbundwerkstoffe alle Werkstoffe, die aus zwei oder mehreren verbundenen Materialien aufgebaut sind. Weiterhin hat es sich als vorteilhaft erwiesen, wenn das Lager und/oder das Gewindelager und/oder das Außenlager und/oder das Kernlager und/oder das Verbindungselement einstückig und/oder materialeinheitlich sind.

Weitere Maßnahmen, Vorteile, Merkmale, Details, Aspekte und Effekte der Erfindung ergeben sich aus den Unteransprüchen, der nachfolgenden Beschreibung sowie den Zeichnungen. In den Zeichnungen ist die Erfindung in mehreren Ausführungsbeispielen schematisch dargestellt. Es zeigen:
- Fig. 1: ein Aufnahmemittel, welches eine Drehsicherung mit einem erfindungsgemäßen Haltesystem aufweist, jedoch ohne eine Überlastkupplung,
- Fig. 2: ein Aufnahmemittel mit einer Überlastkupplung jedoch ohne ein Haltesystem,
- Fig. 3: eine als Diebstahlschutz wirkende erfindungsgemäße Drehsicherung mit einem weiteren Aufnahmemittel mit einem Kernlager und einem Außenlager,
- Fig. 4: das Aufnahmemittel aus Figur 3, wobei das Kernlager vom Außenlager getrennt ist,
- Fig. 5: eine weitere Ausführungsformder Erfindung,
- Fig. 6: einen Ausschnitt aus einem erfindungsgemäßen Türaußengriff mit dem Aufnahmemittel und
- Fig. 7: den Türaußengriff aus Figur 6 mit einem, das Aufnahmemittel abdeckenden Haltesystem.

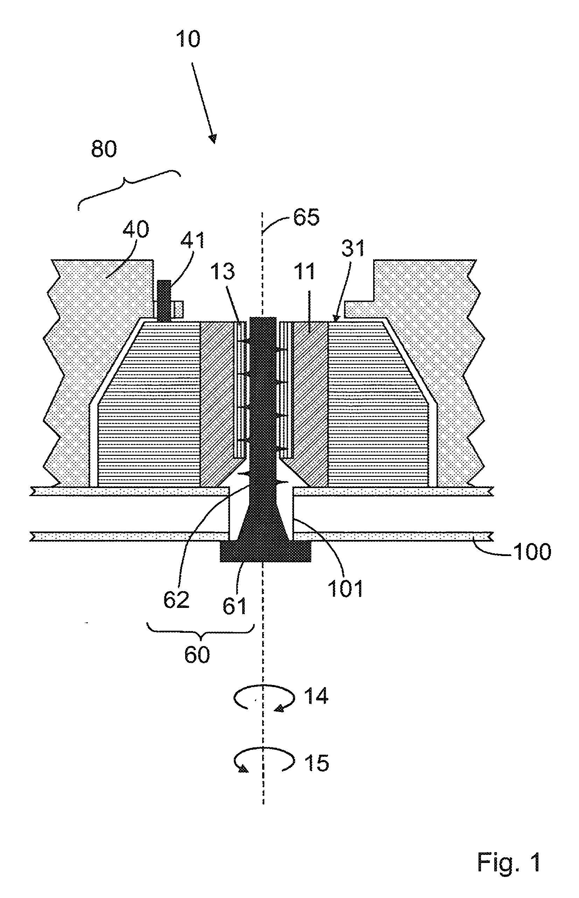

In Fig. 1 ist ein Querschnitt durch ein Aufnahmemittel 10 und eine darin gelagerte Schraube 60 dargestellt. Das Aufnahmemittel 10 besitzt einen zylinderförmigen Grundkörper, dessen Außenflächen zum kopfseitigen Ende hin kegelförmig ausgeformt sind. In seinem Inneren weist das Aufnahmemittel 10 ein Lager 11 auf. Dieses Lager 11 ist einstückig und/oder materialeinheitlich mit den Außenflächen des Aufnahmemittel 10 verbunden. Innerhalb des Lagers 11 ist ein Gewindelager 13 angeordnet, welches eine zylinderförmige Bohrung besitzt, in die die Schraube 60 eingeschraubt wird. Dazu kann das Gewindelager 13 über ein Innengewinde verfügen, in welches ein Gewindeteil 62 der Schraube 60 eingreift. Das Aufnahmemittel 10 dient in Kombination mit der Schraube 60 zur lösbaren Verbindung von unterschiedlichsten Bauteilen, wie etwa dem dargestellten Werkstück 100. Dazu muss das Werkstück 100 über eine Bohrung 101 verfügen, durch die die Schraube 60 geführt wird. Von der entgegengesetzten Seite des Werkstückes 100 kann dann das Aufnahmemittel 10 auf den Gewindeteil 62 der Schraube 60 aufgeschraubt werden. An den seitlichen Außenflächen des Aufnahmemittels 10 ist ein Haltesystem 40 angeordnet. Erfindungsgemäß ist es vorgesehen, dass das Aufnahmemittel 10 mit dem Haltesystem 40 derart zusammenwirkt, dass das Aufnahmemittel 10 und das Haltesystem 40 eine Drehsicherung 80 bilden. Um diese Drehsicherung 80 zu realisieren, weist das Haltesystem 40 ein Haltemittel 41 auf, welches in form- und/oder kraftschlüssigen Kontakt mit dem Aufnahmemittel 10 steht. Die Drehsicherung 80 soll eine Rotation des Aufnahmemittels 10 um eine Längsachse 65 in eine erste Drehrichtung 14 verhindern. Zusätzlich soll die Drehsicherung 80 aber eine Rotation des Aufnahmemittels 10 in eine zweite Drehrichtung 15 ermöglichen. Durch die Art des Gewindeteiles 62 der Schraube 60 weist letzterer zwei bevorzugte Drehrichtungen 14, 15 auf. Bei einer Schraube mit einem Rechtsgewinde führt eine Drehung in die erste Drehrichtung 14 zu einer axialen Bewegung der Schraube 60 auf das Aufnahmemittel 10 zu. Eine Bewegung der Schraube in die zweite Drehrichtung 15 führt zu einem Ausschrauben, also zu einem Entfernen des Schraubenkopfes 61 bzw. der Schraube 60 vom Aufnahmemittel 10.

In dem hier dargestellten Ausführungsbeispiel handelt es sich bei dem Haltemittel 41 der Drehsicherung 80 um einen beweglichen Stift. Dieser kann, muss aber nicht federunterstützt sein und greift in eine - hier nicht dargestellte - Aussparung in der kopfseitigen Außenfläche 31 des Aufnahmemittels 10 ein. Die Aussparung kann keilförmig ausgestaltet sein und einerseits durch eine senkrechte Wand und andererseits durch eine langsam ansteigende Rampe gebildet werden. Wird die Schraube 60 in das Aufnahmemittel 10 eingeschraubt 14, so kann die zwischen dem Gewindelager 13 und dem Gewindeteil 62 wirkende Haft- oder Gleitreibung dazu führen, dass das Aufnahmemittel 10 der Drehbewegung der Schraube 60 folgt. Dadurch reduziert sich aber die relative Bewegung der Schraube 60 gegenüber dem Gewindelager 13 bis zum Stillstand. Folglich wird die Schraube 60 nicht in das Aufnahmemittel 10 eingeschraubt. Nach spätestens einer Umdrehung gelangt das erfindungsgemäße Haltemittel 41 aber an eine Außenkante der Aussparung. Dadurch entsteht ein kraft- und/oder formschlüssiger Kontakt zwischen dem Aufnahmemittel 10 und dem Haltesystem 40. Letzteres nimmt dann das in das Aufnahmemittel 10 übertragene Drehmoment auf. Folglich verharrt das Aufnahmemittel 10 in seiner Position und die Schraube 60 kann in das Gewindelager 11 eingeschraubt werden.

Wird hingegen die Drehrichtung der Schraube umgekehrt - sie also ausgeschraubt 15 - überträgt das Haltemittel 41 nicht mehr das Drehmoment auf das Haltesystem 40. Vielmehr gleitet das Haltemittel 41 aus der rampenartigen Ausformung heraus und über die kopfseitige Außenfläche 31 des Aufnahmemittels 10. Ist der Betrag der Haft- oder Gleitreibung zwischen dem Aufnahmemittel 10 und dem Werkstück 100 geringer als jene Reibung zwischen dem Gewindelager 13 und dem Gewindeteil 62 führt eine Drehung der Schraube 60 in die zweite Drehrichtung 15 zu einer Rotation des Aufnahmemittels 10, nicht aber zu einem Ausschrauben der Schraube 60. Folglich bilden das Aufnahmemittel 10 und das Haltesystem 40 eine Drehsicherung 80.

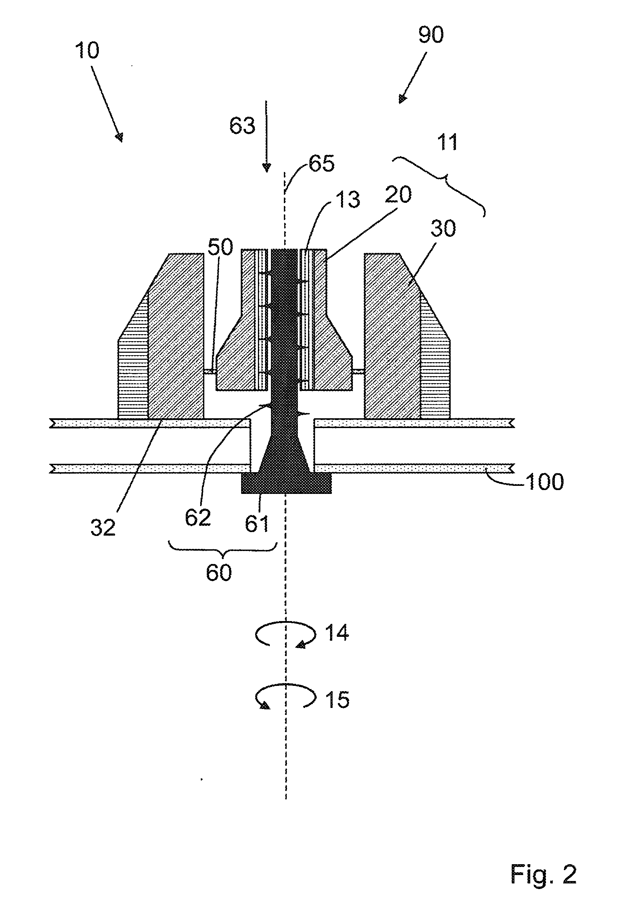

In Fig. 2 ist eine weitere Ausgestaltung des Aufnahmemittels 10 dargestellt. Wie zu erkennen ist, weist das Lager 11 ein Kernlager 20 und ein Außenlager 30 auf, wobei das Kernlager 20 und das Außenlager 30 eine Überlastkupplung 90 aufweisen. Das Kernlager 20 besitzt eine Bohrung 21, in der das Gewindelager 13 angeordnet ist, welches den Gewindeteil 62 der Schraube 60 aufnimmt. Nach einer gewissen Anzahl von Drehungen der Schraube 60 in die erste Drehrichtung 14 erlangen der Schraubenkopf 61 und die bodenseitige Außenfläche 32 des Aufnahmemittels 10 einen Kontakt mit dem Werkstück 100. Wird die Schraube weiter gedreht, so resultiert dieses in einer Kraft 63, die von dem Aufnahmemittel 10 in das Werkstück 100 eingebracht wird. Der Kraftvektor der Kraft 63 verläuft etwa parallel zur Längsachse 65 der Schraube 60, falls das Aufnahmemittel 10 zylindersymmetrisch zu dieser Längsachse 65 aufgebaut ist. Erfindungsgemäß ist es vorgesehen, dass die Überlastkupplung 90 die maximal in das Aufnahmemittel 10 einbringbare Kraft 63 auf eine Grenzkraft 64 begrenzt. Überschreitet die Kraft 63 den Betrag der Grenzkraft 64 trennt die Überlastkupplung 90 das Kernlager 20 vom Außenlager 30. In dem dargestellten Ausführungsbeispiel verbindet das Kernlager 20 und das Außenlager 30 ein Verbindungselement 50. Das Verbindungselement 50 kann aus einem Rast- und Gegenrastmittel aufgebaut sein und eine reversible Trennung erlauben. Nach Überschreiten der Grenzkraft 64 trennt das Verbindungselement 50 das Kernlager 20 vom Außenlager 30, wodurch die Schraube 60 zwar weiter gedreht werden kann, aber keine Kraft 63 mehr in das Aufnahmemittel 10 eingebracht wird.

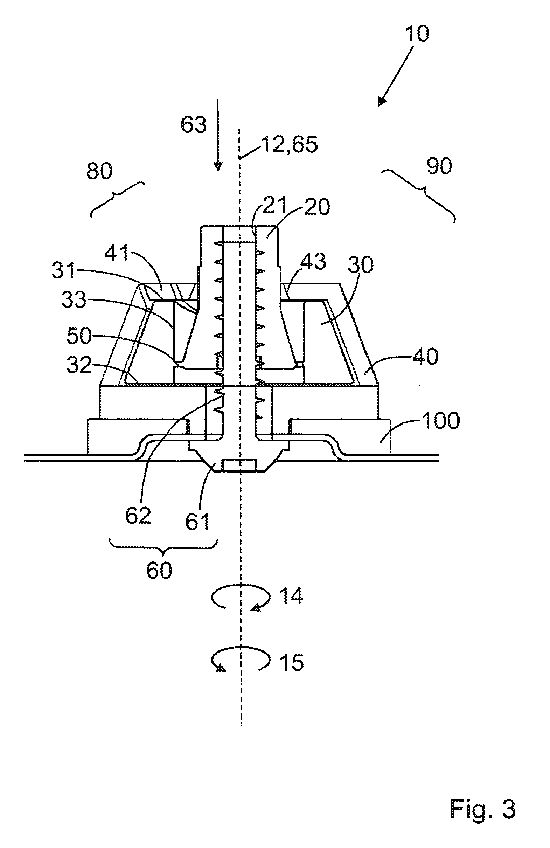

In Fig. 3 ist eine vorteilhafte Ausgestaltung des erfindungsgemäßen Aufnahmemittels 10 dargestellt. Dieses Aufnahmemittel 10 weist sowohl eine Drehsicherung 80 als auch eine Überlastkupplung 90 auf. Das Aufnahmemittel 10 weist ein Kernlager 20 und ein Außenlager 30 auf. Letzteres besitzt eine kegelartige Gestalt und weist in seinem Inneren eine Bohrung 33 auf, in der das Kernlager 20 angeordnet ist. Dieses Kernlager 20 nimmt in seinem Inneren 21 den Gewindeteil 62 der Schraube 60 auf. Über das Verbindungselement 50 sind das Kernlager 20 und das Außenlager 30 stoffschlüssig verbunden. In dem dargestellten Ausführungsbeispiel handelt es sich bei dem Verbindungselement 50 um einen Steg, der aus der Innenfläche der zylinderförmigen Ausnehmung 33 in Richtung der Außenfläche des Kernlagers 20 verläuft. Je nach Material des Aufnahmemittels 10 ist es möglich, dass das Kernlager 20, das Außenlager 30 und das Verbindungselement 50 einstückig und/oder materialeinheitlich aufgebaut sind.

In dem dargestellten Ausführungsbeispiel umschließt das Haltesystem 40 das Aufnahmemittel 10 zum größten Teil. Nur das Kernlager 20 ragt durch eine Öffnung 43 aus dem Haltesystem 40. Das Haltemittel 41 ist oberhalb der kopfseitigen Außenfläche 31 des Aufnahmemittels 10 angeordnet und besteht aus einem Rastmittel, welches mit einem Gegenrastmittel des Aufnahmemittels 10 zusammenwirkt. Das Aufnahmemittel 10 besitzt eine Lagerlängsachse 12, welche deckungsgleich mit der Längsachse 65 der Schraube 60 ist. Dadurch ist sichergestellt, dass das Aufnahmemittel 10 die Kraft 63 gleichmäßig über die bodenseitige Außenfläche 32 in das Werkstück 100 einbringt.

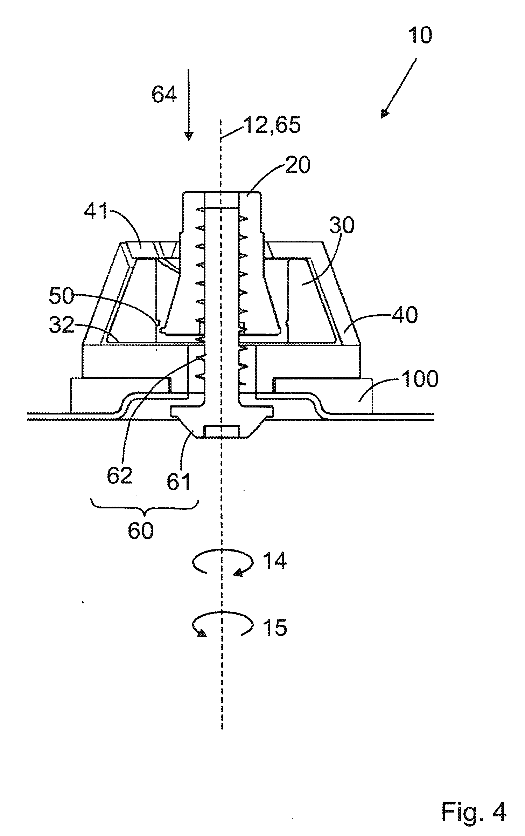

Überschreitet die Kraft 63 den Betrag der Grenzkraft 64, so trennt erfindungsgemäß die Überlastkupplung 90 das Kernlager 20 vom Außenlager 30, was Fig. 4 verdeutlicht. Durch eine entsprechende Wahl des Verbindungselementes 50 muss die Trennung nicht schlagartig vor sich gehen. Vielmehr kann das Verbindungselement zuerst eine Phase der elastischen Verformung durchlaufen. Steigt die eingebrachte Kraft 63 weiter an, resultiert dieses in einer plastischen Verformung des Verbindungselementes 50, welches erst nach Überschreiten der Grenzkraft 64 aufgetrennt wird. Ist das Kernlager 20 vollständig vom Außenlager 30 getrennt, resultiert eine Drehung der Schraube 60 in eine beliebige Drehrichtung 14,15 nicht in einer Variation der Position des Kernlagers 20 auf dem Gewindeteil 62. Ein Ausziehen der Schraube 60 aus der Bohrung 101 im Werkstück 100 ist somit unmöglich.

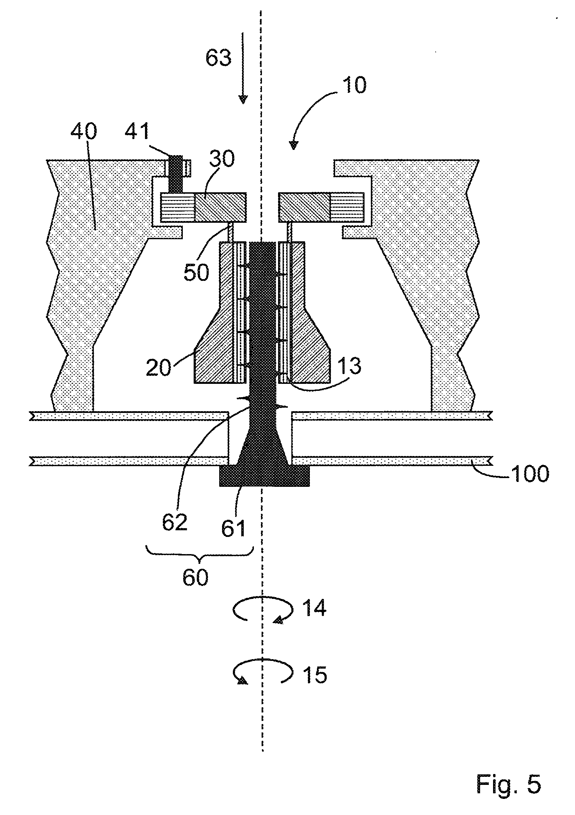

In Fig. 5 ist eine weitere Ausführungsform des erfindungsgemäßen Aufnahmemittels 10 dargestellt. Entgegen der oben beschriebenen Ausführungsformen ist das Außenlager 30 an der Kopfseite des Kernlagers 20 angeordnet und mit diesem über die Verbindungselemente 50 verbunden. Überschreitet die Kraft 63 die Grenzkraft 64, so resultiert dieses ebenfalls in einer Trennung des Kernlagers 20 vom Außenlager 30. Des Weiteren verhindert das Haltemittel 41 eine Rotation des Aufnahmemittels 10 in eine erste Drehrichtung 14 und ermöglicht eine Rotation in eine zweite Drehrichtung 15.

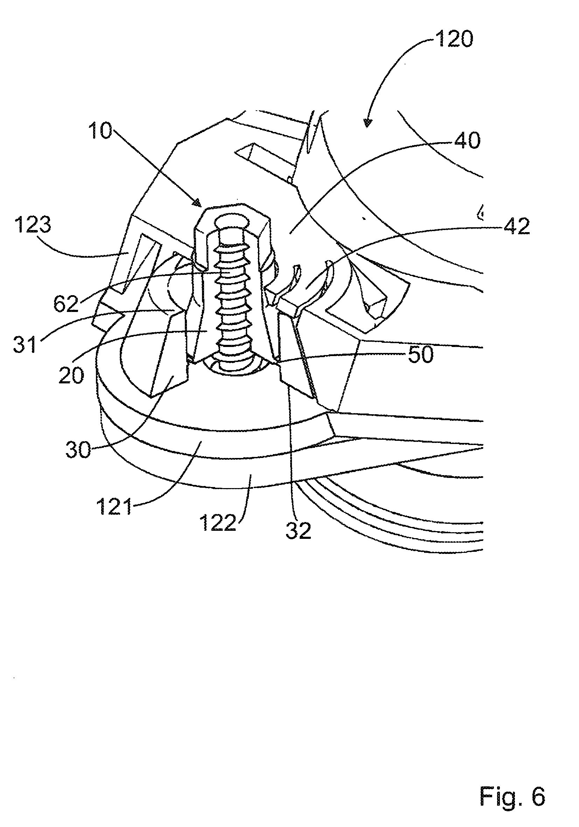

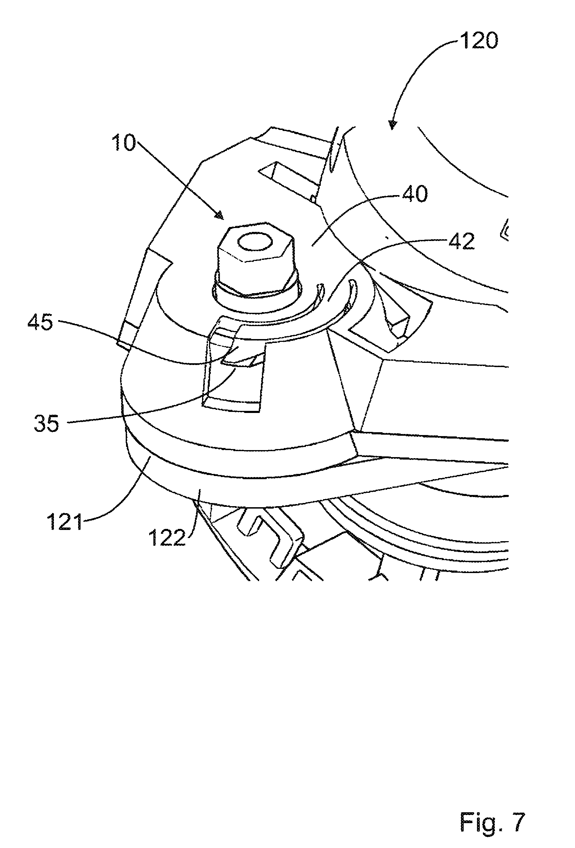

Ausgangspunkt der Erfindung war es, dass die aus dem Stand der Technik bekannten Aufnahmemittel für die Montage von Türaußengriffen an Kraftfahrzeugen unzulänglich sind. In Fig. 6 ist ein solcher Türaußengriff 120 bereichsweise dargestellt, der mit einem erfindungsgemäßen Aufnahmemittel 10 an eine Karosserie 122 eines Kraftfahrzeuges montiert ist. Das Aufnahmemittel 10 ist in der Fig. 6 bereichsweise in einer Schnittdarstellung gezeigt, wodurch sich das Zusammenwirken und die Position der Einzelteile besser erkennen lässt. In seinem Inneren lagert das Aufnahmemittel 10 den Gewindeteil 62 der Schraube 60. Zylindersymmetrisch darum angeordnet ist das Kernlager 20, welches über das Verbindungselement 50 mit dem Außenlager 30 verbunden ist. Die bodenseitige Außenfläche 32 stützt sich auf einen Träger 121 des Türaußengriffes 120 ab. Das Haltesystem 40 überdeckt die kopfseitige Außenfläche 31 des Aufnahmemittels 10 zumindest bereichsweise. Einstückig und materialeinheitlich mit dem Haltesystem 40 verbunden ist ein Haltemittel 41. Bei dem Haltemittel 41 handelt es sich um einen federbelasteten Steg 42, der oberhalb der kopfseitigen Außenfläche 31 des Außenlagers 30 angeordnet ist. Das Ende des federbelasteten Steges 42 ist zu einer Rastnase 45 ausgeformt, was Fig. 7 verdeutlicht. Die Rastnase 45 greift in das Gegenrastmittel 35 ein. Bei dem Gegenrastmittel 35 handelt es sich in dem dargestellten Ausführungsbeispiel um eine Rastaussparung, die eine V-artige Struktur aufweist.

Der Vorteil des erfindungsgemäßen Aufnahmemittels 10 liegt darin, dass es einer unbefugten Person nicht mehr möglich ist, jene Schrauben zu demontieren, welche den Türaußengriff am Fahrzeug halten. Aufgrund der Drehsicherung 80 ist es einem Unbefugten nicht möglich durch Ausschrauben 15 die Schraube 60 aus dem Lager 11 bzw. dem Gewindelager 13 zu entfernen. Vielmehr führt die Drehung der Schraube 60 nur zu einer Rotation des Aufnahmemittels 10. Gedenkt die unbefugte Person den Schraubenkopf 61 durch ein weiteres Anziehen abzuscheren, verhindert dieses die Überlastkupplung 90. Nach der Trennung des Kernlagers 20 vom Außenlager 30 führt eine Rotation der Schraube 60 in eine beliebige Richtung 14,15 nur zu einer Drehung des Kernlagers 20. Die Position des Gewindeteiles 62 innerhalb des Kernlagers 20 verändert sich dabei nicht. Der Türaußengriff wird somit weiterhin in seiner Position gehalten.

Durch die beschriebenen Merkmale des Aufnahmemittels 10 muss bei der fabrikgemäßen Montage der Türgriff 120 nur von der Außenseite zugängig sein. Denn durch die Drehsicherung ist gewährleistet, dass die Schrauben 60 angezogen werden können. Zusätzlich kann das Aufnahmemittel 10 über eine sechskantige Außenform im Kopfbereich des Kernlagers 20 verfügen, was auch die Fig. 6 und 7 verdeutlichen. Diese sechskantige Außenform kann bei einer Montage, bei der sowohl die Außen- als auch die Innenseite der Karosserie 122 zugängig ist, eine noch leichtere Befestigung des Türgriffes 120 mit Hilfe des erfindungsgemäßen Aufnahmemittels 10 ermöglichen.

In den Ausführungsbeispielen ist das Aufnahmemittel 10 für eine Schraube 60 mit einem Rechtsgewinde beschrieben. Diese soll nicht als eine Beschränkung verstanden werden. Vielmehr ist es auch möglich, das erfindungsgemäße Aufnahmemittel 10 für eine Schraube 60 mit einem Linksgewinde zu verwenden. Dabei ändert sich die Ausrichtung der in den Figuren gezeigten ersten und zweiten Drehrichtung 14,15. Die sonstigen Funktionen bleiben erhalten.

In den Ausführungsbeispielen wird neben dem eigentlichen Aufnahmemittel auch dessen Verwendung in einem Türaußengriff beschrieben. Dieses soll jedoch nicht als eine Beschränkung des Anwendungsbereiches des erfindungsgemäßen Aufnahmemittels verstanden werden. Vielmehr kann das Aufnahmemittel in den unterschiedlichsten Bereichen eingesetzt werden. So ist es denkbar, das Aufnahmemittel außer in dem beschriebenen Türaußengriff allgemein in Betätigungsvorrichtung oder in weiteren Zweigen des Automotive-Sektors einzusetzen: zum Beispiel in Heckverschlüssen, Kennzeichenleuchten oder Handschuhkästenverschlüssen. Denkbar ist ebenfalls eine Verwendung in einer so genannten Multifunktionsleiste, die eine Kombination aus einem Heckverschluss, einer Kennzeichenleuchte, einer Kamera und einem Schließzylinder darstellt. Weiterhin können auch in den einzelnen Bauelementen der oben aufgezählten Baugruppen erfindungsgemäße Aufnahmemittel Verwendung finden. Insbesondere Schlösser, Schließzylinder oder Schließsysteme bieten sich für die Integration des erfindungsgemäßen Aufnahmemittels an.

Neben dem Automotive-Sektor kann das Aufnahmemittel auch in anderen Bereichen Verwendung finden. So sind sämtliche Gebiete, die sich mit Kraftfahrzeugen befassen - wie etwa auch die Schifffahrt oder die Luft- und Raumfahrttechnik -, potenzielle Anwendungsbereiche für das erfindungsgemäße Aufnahmemittel. Denn dieses Aufnahmemittel ist überall dort vorteilhaft, wo ein Schraubenkopf einer Schraubverbindung zugängig ist, aber ein Lösen der Schraubverbindung durch unbefugte Personen verhindert werden soll.

### Bezugszeichenliste

- 10: Aufnahmemittel
- 11: Lager
- 12: Lagerlängsachse
- 13: Gewindelager
- 14: erste Drehrichtung
- 15: zweite Drehrichtung

- 20: Kernlager
- 21: Bohrung im Kernlager 20

- 30: Außenlager
- 31: kopfseitige Außenfläche des Aufnahmemittels 10
- 32: bodenseitige Außenfläche des Aufnahmemittels 10
- 33: zylinderförmige Ausnehmung im Außenlager 30
- 35: Gegenrastmittel

- 40: Haltesystem
- 41: Haltemittel
- 42: federbelasteter Steg
- 43: Öffnung im Haltesystem 40
- 45: Rastmittel

- 50: Verbindungselement

- 60: Schraube
- 61: Schraubenkopf
- 62: Gewindeteil
- 63: Kraft
- 64: Grenzkraft
- 65: Längsachse der Schraube

- 80: Drehsicherung

- 90: Überlastkupplung

- 100: Werkstück
- 101: Bohrung im Werkstück 100

- 120: Türaußengriff
- 121: Träger des Türaußengriffes 120
- 122: Karosserie des Kraftfahrzeuges

## Patentansprüche

1. Diebstahlschutz, der eine Drehsicherung (80), die durch ein Aufnahmemittel und ein Haltesystem (40) gebildet ist, aufweist,
wobei in dem Aufnahmemittel (10) ein Lager (11) angeordnet ist und in das Lager (11) eine Schraube (60), die einen Schraubenkopf (61) und ein Gewindeteil (62) aufweist, einschraubbar ist,
wobei die Drehsicherung (80) eine Rotation des Aufnahmemittels (10) um eine Längsachse (65) In eine erste Drehrichtung (14) beim Einschrauben verhindert und eine Rotation des Aufnahmemittels (10) in eine zweite Drehrichtung (15) so ermöglicht, dass ein Ausschrauben der Schraube (80) verhindert wird, wobei insbesondere die erste Drehrichtung (14) gegenläufig zu der zweiten Drehrichtung (15) ist,
**dadurch gekennzeichnet,**
**dass** das Lager (11) ein Kernlager (20) und ein Außenlager (30) aufweist, wobei zwischen dem Kernlager (20) und dem Außenlager (30) eine Überlastkupplung (90) angeordnet ist.

2. Diebstahlschutz nach Anspruch 1,
**dadurch gekennzeichnet,**
**dass** das Haltesystem (40) ein Haltemittel (41) aufweiset, wobei das Aufnahmemittel (10) an dem Haltesystem (40) mittel- oder unmittelbar angeordnet Ist und das Haltemittel (41) einen form- und/oder kraftschlüssigen Kontakt mit dem Aufnahmemittel (10) aufweist.

3. Dlebstahlschutz nach Anspruch 2
**dadurch gekennzeichnet,**
**dass** das Haltesystem so ausgeführt ist, dass einerseits das Haltesystem (40) und/oder das Haltemittel (41) das Aufnahmemittel (10) bei einem Einschrauben der Schraube (60) drehfest hält und anderseits bei einem Ausschrauben der Schraube (60) das Aufnahmemittel (10) der axialen Drehung der Schraube (60) folgt, so dass die Winkelgeschwindigkeit der Schraube und des Aufnahmemittels etwa gleich sind.

4. Diebstahlschutz nach einem der Ansprüche 2 oder 3,
**dadurch gekennzeichnet,**
**dass** das Haltemittel (41) ein Rastmittel (46) und das Aufnahmemittel (10) ein Gegenrastmittel (35) aufweist, insbesondere, dass das Haltemittel (41) eine Rastnase und das Aufnahmemittel (10) eine Rastaussparung aufweist.

5. Diebstahlschutz nach einem der Ansprüche 2 bis 4,
**dadurch gekennzeichnet,**
**dass** das Haltesystem (40) das Aufnahmemittel (10) zumindest bereichsweise umfasst und das Haltemittel (41) ein federbelasteter Steg (42) ist, wobei ein Ende des Haltemittels (41) als eine Rastnase (45) ausgeformt ist, die in eine V-artige Rastaussparung (36) des Aufnahmemittels (10) eingreifbar ist, wobei eine Seite der Rastaussparung (35) etwa senkrecht verläuft, so dass ein auf das Aufnahmemittel einwirkendes Drehmoment optimal auf das Haltemittel übertragbar ist, und die entgegen gesetzte Seite der Rastaussparung (35) nur eine geringe Steigung aufweist, so dass die Rastnase bei einer entgegen gesetzten Drehung des Aufnahmemittels leicht aus der Rastaussparung herausgleitbar ist, wobei insbesondere der Steg (42) oberhalb einer kopfseitigen Außenfläche (31) des Aufnahmemittels (10), die sich senkrecht zur Drehrichtung (14) an dem Schraubenkopf abgewandten Ende des Aufnahmemittels befindet, angeordnet ist.

6. Diebstahlschutz nach einem der vorhergehenden Ansprüche,
**dadurch gekennzeichnet,**
**dass** das Haltesystem (40) einstückig und/oder materialeinheitlich mit einem Werkstück (100) verbunden ist.

7. Diebstahlschutz nach Anspruch 1,
**dadurch gekennzeichnet,**
**dass** beim Zusammenwirken des Diebstahlschutzes mit einer Schraube die Schraube (60) eine Kraft (63) In das Aufnahmemittel (10) einbringt, die Kraft (63) etwa parallel zu der Längsachse (65) der Schraube (60) auf das Aufnahmemittel (10) einwirkt und die Überlastkupplung (90) so ausgestaltet Ist, dass die Überlastkupplung (90) die maximal in das Aufnahmemittel (10) einbringbare Kraft (63) auf eine Grenzkraft (64) begrenzt.

8. Diebstahlschutz nach Anspruch 7,
**dadurch gekennzeichnet,**
**dass** beim Erreichen der Grenzkraft (64) das Kernlager (20) vom Außenlager (30) durch die Überlastkupplung (90) trennbar ist.

9. Dlebstahlschutz nach einem der Ansprüche 7 oder 8,
**dadurch gekennzeichnet,**
**dass** ein Verbindungselement (50) als Überlastkupplung (90) das Kernlager (20) und das Außenlager (30) verbindet, wobei Insbesondere, das Verbindungselement (50) das Kernlager (20) und das Außenlager (30) stoffschlüssig verbindet.

10. Diebstahlschutz nach Anspruch 9,
**dadurch gekennzeichnet,**
**dass** das Verbindungselement (50) so ausgestaltet ist, dass die Grenzkraft (64) das Verbindungselement (50) plastisch und/oder elastisch verformt und/oder zerstört.

11. Diebstahlschutz nach einem der vorhergehenden Ansprüche,
**dadurch gekennzeichnet,**
**dass** das Lager (11) mit der Überlastkupplung (90) derart ausgestaltet ist, dass nach einer Trennung des Kernlagers (20) vom Außenlager (30) an der Überlastkupplung (90) eine Rotation der Schraube (60) nur zu einer Drehung des Kernlagers (20) führt.

12. Diebstahlschutz nach einem der vorhergehenden Ansprüche.
**dadurch gekennzeichnet,**
**dass** das Lager so ausgestaltet Ist, dass nach einem Einschrauben der Schraube (60) in das Kernlager (20) der Schraubenkopf (61) und eine bodenseitige Außenfläche (32) des Außenlagers (30), die senkrecht zur Ausrichtung des Gewindeteils (62) Ist und dem Schraubenkopf (61) zugewandt ist, einen Kontakt mit einem Werkstück (100) haben und/oder zwischen dem Kernlager (20) und dem Schraubenkopf (81) ein Spiel gegenüber dem Werkstück (100) vorhanden Ist.

13. Schraubverbindung mit einer Schraube (60) und einem Diebstahlschutz gemäß einem der Ansprüche 1 bis 12.

14. Türaußengriff (120) mit einer Schraubverbindung nach Anspruch 13.

15. Betätigungsvorrichtung mit einer Schraubverbindung nach Anspruch 13.

## Claims

1. An anti-theft protection that comprises a rotary lock (80) that is formed by a receiving means and a holding system (40),
wherein a bearing (11) is arranged in the receiving means (10), and a screw (60) comprising a screw head (61) and a threaded part (62) can be screwed into the bearing (11),
wherein when screwing in, the rotary lock (80) prevents the receiving means (10) from rotating about a longitudinal axis (65) in a first rotational direction (14) and enables a rotation of the receiving means (10) in a second rotational direction (15) in such a manner that unscrewing of the screw (60) is prevented, wherein in particular the first rotational direction (14) runs opposite to the second rotational direction (15),
**characterized in that**
the bearing (11) comprises a core part (20) and an outer part (30), wherein an overload coupling (90) is arranged between the core part (20) and the outer part (30).

2. The anti-theft protection according to claim 1,
**characterized in that**
the holding system (40) has a holding means (41), wherein the receiving means (10) is indirectly or directly arranged on the holding system (40), and the holding means (41) has a positive fitting and/or non-positive force-fitting contact with the receiving means (10).

3. The anti-theft protection according to claim 2,
**characterized in that**
the holding system is configured such that, on the one hand, the holding system (40) and/or the holding means (41) holds the receiving means (10) in a rotationally locked manner when screwing in the screw (60), and, on the other, when unscrewing the screw (60), the receiving means (10) follows the axial rotation of the screw (60) so that the angular speeds of the screw and the receiving means are approximately identical.

4. The anti-theft protection according to claim 2 or claim 3,
**characterized in that**
the holding means (41) has a latching means (45) and the receiving means (10) has a counter latching means (35), in particular, that the holding means (41) has a latching nose and the receiving means (10) has a latching recess.

5. The anti-theft protection according to any one of the claims 2 to 4,
**characterized in that**
the holding system (40) surrounds the receiving means (10) at least in certain areas, and the holding means (41) is a spring-loaded ridge (42), wherein one end of the holding means (41) is formed as a latching nose (45) that can engage in a V-like latching recess (35) of the receiving means (10), wherein one side of the latching recess (35) runs approximately perpendicular so that a torque acting on the receiving means can be optimally transmitted to the holding means, and the opposite side of the latching recess (35) has only a slight slope so that during a rotation of the receiving means in the opposite direction, the latching nose can easily slide out of the latching recess, wherein in particular the ridge (42) is arranged above a head-side outer surface (31) of the receiving means (10), which outer surface is located perpendicular to the rotational direction (14) on that end of the receiving means that faces away from the screw head.

6. The anti-theft protection according to any one of the preceding claims,
**characterized in that**
the holding system (40) is connected to a workpiece (100) as one piece and/or through the same material.

7. The anti-theft protection according to claim 1,
**characterized in that**
during the interaction of the anti-theft protection with a screw, the screw (60) introduces a force (63) into the receiving means (10), the force (63) acts on the receiving means (10) approximately parallel to the longitudinal axis (65) of the screw (60), and the overload coupling (90) is configured such that the overload coupling (90) limits the maximum force (63) that can be introduced into the receiving means (10) to a limit force (64).

8. The anti-theft protection according to claim 7,
**characterized in that**
upon reaching the limit force (64), the core part (20) can be disconnected from the outer part (30) through the overload coupling (90).

9. The anti-theft protection according to claim 7 or claim 8,
**characterized in that**
a connecting element (50) as an overload coupling (90) interconnects the core part (20) and outer part (30), wherein in particular the connecting element (50) interconnects the core part (20) and the outer part (30) in a firmly bonding manner.

10. The anti-theft protection according to claim 9,
**characterized in that**
the connecting element (50) is configured such that the limit force (64) plastically and/or elastically deforms the connecting element (50) and/or destroys the connecting element.

11. The anti-theft protection according to any one of the preceding claims,
**characterized in that**
the bearing (11) with the overload coupling (90) is configured such that after disconnecting the core part (20) from the outer part (30) at the overload coupling (90), rotating the screw (60) results only in turning of the core part (20).

12. The anti-theft protection according to any one of the preceding claims,
**characterized in that**
the bearing is configured such that after screwing the screw (60) into the core part (20), the screw head (61) and a bottom-side outer surface (32) of the outer part (30), which bottom-side outer surface is perpendicular to the alignment of the threaded part (62) and faces toward the screw head (61), are in contact with a workpiece (100), and/or there is a play between the core part (20) and the screw head (61) with respect to the workpiece (100).

13. A screw connection comprising a screw (60) and an anti-theft protection according to any one of the claims 1 to 12.

14. An exterior door handle (120) comprising a screw connection according to claim 13.

15. An actuating device comprising a screw connection according to claim 13.

## Revendications

1. Protection antivol, qui présente un blocage en rotation (80) qui est formé par un moyen de réception et un système de retenue (40),
sachant qu'un palier (11) est disposé dans le moyen de réception (10) et qu'une vis (60), qui présente une tête de vis (61) et une partie filetée (62), peut être vissée dans le palier (11),
sachant que le blocage en rotation (80) empêche lors du vissage une rotation du moyen de réception (10) autour d'un axe longitudinal (65) dans un premier sens de rotation (14) et permet une rotation du moyen de réception (10) dans un deuxième sens de rotation (15) de telle sorte qu'un dévissage de la vis (60) est empêché, sachant notamment que le premier sens de rotation (14) est en sens contraire du deuxième sens de rotation (15),
**caractérisée en ce**
**que** le palier (11) présente un palier intérieur (20) et un palier extérieur (30), sachant qu'un accouplement de surcharge (90) est disposé entre le palier intérieur (20) et le palier extérieur (30).

2. Protection antivol selon la revendication 1,
**caractérisée en ce**
**que** le système de retenue (40) présente un moyen de retenue (41), sachant que le moyen de réception (10) est disposé indirectement ou directement sur le système de retenue (40) et que le moyen de retenue (41) présente un contact en engagement positif et/ou à force avec le moyen de réception (10).

3. Protection antivol selon la revendication 2,
**caractérisée en ce**
**que** le système de retenue est réalisé de telle sorte que, d'une part le système de retenue (40) et/ou le moyen de retenue (41) maintient le moyen de réception (10) bloqué en rotation lors d'un vissage de la vis (60), et d'autre part, lors d'un dévissage de la vis (60), le moyen de réception (10) suit la rotation axiale de la vis (60), de sorte que les vitesses angulaires de la vis et du moyen de réception sont approximativement identiques.

4. Protection antivol selon la revendication 2 ou 3,
**caractérisée en ce**
**que** le moyen de retenue (41) présente un moyen d'enclenchement (45) et le moyen de réception (10) un moyen d'enclenchement complémentaire (35), en particulier en ce que le moyen de retenue (41) présente un ergot d'enclenchement et le moyen de réception (10) un évidement d'enclenchement.

5. Protection antivol selon l'une des revendications 2 à 4,
**caractérisée en ce**
**que** le système de retenue (40) entoure au moins partiellement le moyen de réception (10) et le moyen de retenue (41) est une branche (42) sollicitée par ressort, sachant qu'une extrémité du moyen de retenue (41) est réalisée sous la forme d'un ergot d'enclenchement (45) qui peut être engagé dans un évidement d'enclenchement (35) en forme de V du moyen de réception (10), sachant qu'un côté de l'évidement d'enclenchement (35) s'étend environ verticalement, de sorte qu'un couple de rotation agissant sur le moyen de réception peut être optimalement transmis sur le moyen de retenue, et que le côté opposé de l'évidement d'enclenchement (35) ne présente qu'une faible pente, de sorte que l'ergot d'enclenchement, lors d'une rotation opposée du moyen de réception, peut être facilement glissé hors de l'évidement d'enclenchement, sachant notamment que la branche (42) est disposée au-dessus d'une surface extérieure (31) côté tête du moyen de réception (10), surface qui se trouve perpendiculairement à la direction de rotation (14) à l'extrémité du moyen de réception qui est opposée à la tête de vis.

6. Protection antivol selon l'une des revendications précédentes,
**caractérisée en ce**
**que** le système de retenue (40) est relié d'un seul tenant et/ou dans le même matériau à une pièce (100).

7. Protection antivol selon la revendication 1,
**caractérisée en ce**
**que**, lors de la coopération de la protection antivol avec une vis, la vis (60) exerce une force (63) dans le moyen de réception (10), la force (63) agit environ parallèlement à l'axe longitudinal (65) de la vis (60) sur le moyen de réception (10), et l'accouplement de surcharge (90) est conçu de telle sorte que l'accouplement de surcharge (90) limite à une force limite (64) la force (63) maximale pouvant être exercée dans le moyen de réception (10).

8. Protection antivol selon la revendication 7,
**caractérisée en ce**
**que**, à l'atteinte de la force limite (64), le palier intérieur (20) peut être séparé du palier extérieur (30) par l'accouplement de surcharge (90).

9. Protection antivol selon la revendication 7 ou 8,
**caractérisée en ce**
**qu'**un élément de liaison (50) relie en tant qu'accouplement de surcharge (90) le palier intérieur (20) et le palier extérieur (30), sachant notamment que l'élément de liaison (50) relie le palier intérieur (20) et le palier extérieur (30) par liaison de matière.

10. Protection antivol selon la revendication 9,
**caractérisée en ce**
**que** l'élément de liaison (50) est conçu de telle sorte que la force limite (64) déforme plastiquement et/ou élastiquement et/ou détruit l'élément de liaison (50).

11. Protection antivol selon l'une des revendications précédentes,
**caractérisée en ce**
**que** le palier (11) pourvu de l'accouplement de surcharge (90) est conçu de telle sorte qu'à la suite d'une séparation du palier intérieur (20) du palier extérieur (30) au niveau de l'accouplement de surcharge (90), une rotation de la vis (60) engendre uniquement une rotation du palier intérieur (20).

12. Protection antivol selon l'une des revendications précédentes,
**caractérisée en ce**
**que** le palier est conçu de telle sorte qu'à la suite d'un vissage de la vis (60) dans le palier intérieur (20), la tête de vis (61) et une surface extérieure (32) côté fond du palier extérieur (30), qui est perpendiculaire à l'orientation de la partie filetée (62) et est tournée vers la tête de vis (61), sont en contact avec une pièce (100), et/ou un jeu par rapport à la pièce (100) est présent entre le palier intérieur (20) et la tête de vis (61).

13. Assemblage vissé avec une vis (60) et une protection antivol selon l'une des revendications 1 à 12.

14. Poignée extérieure de porte (120) avec un assemblage vissé selon la revendication 13.

15. Dispositif d'actionnement avec un assemblage vissé selon la revendication 13.
